# EUROPEAN PATENT APPLICATION

(11) **EP 2 709 387 A1**
(43) Date of publication of application: **19.03.2014**
(21) Application number: 12006554.5
(22) Date of filing: 18.09.2012
(51) Int. Cl.: H04W 8/02, H04W 8/26, H04W 8/18, H04W 60/00, H04W 88/06, H04W 48/18

(54) **A method for changing network usage in a mobile telecommunication system**

(71) Applicant: Giesecke & Devrient GmbH, 81677 München (DE)
(72) Inventor: Wennberg, Martin, 167 55 Bromma (SE); Eriksson, Alf, 18330 Täby (SE); Hult, Jorgen, 146 40 Tullinge (SE)

(57) **Abstract**

The invention relates to a method performed in a mobile communication system, the system comprising a plurality of mobile equipments (1) each including a subscription module (2), mobile networks (N1, N2) and a server (3). The subscription module (2) of a subscriber stores subscription credentials (SC1) of the subscriber (SU) allowing the subscriber to logon to a first mobile network (N1) of the mobile networks (N1,N2). The server (3) decides (22) whether to move at least one subscriber from the first mobile network (N1) to a second mobile network (N2) in case that a first criteria is fulfilled. The server (3) amends (25) the subscription credentials (SC2) stored in the subscription module (2), the amended subscription credentials (SC2) allowing the subscriber to logon to the second mobile network (N2) of the mobile networks (N1,N2) but not to the first mobile network (N1).

## Description

The invention refers to a method for changing between mobile networks used by a subscriber via a mobile equipment in a mobile telecommunication system as well as to a mobile telecommunication system performing this method.

In mobile telecommunication systems, corresponding subscribers may use mobile networks of different technologies for data transfer. Common technologies are 2G/GSM (GSM = Global System for Mobile Communications), 3G/UMTS (UMTS = Universal Mobile Telecommunications System) and 4G/LTE (LTE = Long Term Evolution). 4G networks provide a higher level of service and particularly higher data rates in comparison to 3G and 2G networks. Analogously, 3G networks have a greater bandwidth than 2G networks. Though networks with higher data transmission capabilities have a better performance, there are scenarios in which a lower data rate is sufficient, e.g. for conventional voice calls of a subscriber via a mobile phone. In such scenarios, it is desirable that a subscriber only uses a network with a lower level of service, thus not occupying resources of networks with higher performance. Furthermore, by using networks with lower performance, the battery consumption of the mobile equipment used for communication is reduced.

Document WO 2009/135991 A1 describes a method and a system for dynamic management of access selection of mobile equipment where a priority list of networks to be used by the mobile equipment for communication is updated depending on certain criteria.

Document US 2005/0182802 A1 discloses a method of updating an authentication algorithm in a card referring to a subscriber identity. A first authentication algorithm and a second authentication algorithm are stored in the card. When switching to the second authentication algorithm, the first algorithm is inhibited and the second algorithm is activated. The switching of the authentication algorithms can be carried out on the initiative of a network operator.

It is an object of the invention to provide a method for an enforced change between mobile networks enabling an easy and flexible switching between different networks to be used by a subscriber.

This object is solved by the subject matter of the independent claims. Preferred embodiments of the invention are defined in the dependent claims.

A method in a mobile communication system, the system comprising mobile networks, a server and a plurality of mobile equipments each including a subscription module. The subscription module stores subscription credentials of the subscriber allowing the mobile equipment to logon to a first mobile network of the mobile networks. The server decides whether to move at least one subscriber from the first mobile network to a second mobile network in case that a first criteria is fulfilled. After the decision to move at least one subscriber, the server amends the subscription credentials stored in the subscription module, the amended subscription credentials allowing the subscriber to logon to the second mobile network of the mobile networks but not to the first mobile network.

The present method enables a change between mobile networks used by a subscriber via a mobile equipment (e.g. a mobile phone or a laptop computer) in a mobile telecommunication system. Here and in the following, a subscriber is represented by a subscriber module (e.g. a USIM card) which stores a (unique) subscriber identity assigned to the module. Accordingly, steps with respect to a subscriber hereinafter refer to steps in which the corresponding module of the subscriber is involved.

The mobile communication system used in the present method comprises a server managing the subscriptions of the subscriber to different mobile networks. Each mobile network comprises a register for handling the authentication of the subscriber to the mobile network. The subscription credentials of the subscriber preferably refer to the subscriber identity and appropriate authentication keys stored in the module for the corresponding mobile network. Preferably, the server is designed to handle a great number of subscriptions of different subscribers to several mobile networks.

The server triggers the change from a first mobile network currently used by the subscriber to another second mobile network in case that one or more criteria out of a number of criteria are fulfilled. Said one or more criteria may refer to a part of the number of criteria or even to all of those criteria. Furthermore, the number of criteria may only comprise one criterion.

By amending the subscription credentials the server enforces a network change. The decision to move a subscriber from a first to a second network thus corresponds to a decision to move the future attachments of the equipment from the first to the second network.

The decision to move a subscriber is made internally in the server. The internal decision is based on technical criteria. The decision of the server in the present application does not refer to a server external decision or to an external order.

The present method has the advantage that an easy change of networks is performed by switching between authentication credentials used for logon to the respective network. This change is initiated by a central server handling the subscription credentials for different networks. This server monitors certain criteria and triggers the network change if those criteria are fulfilled. A flexible adjustment of the criteria for a network change can be achieved by adapting the criteria in the central server.

In a particularly preferred embodiment, the network change from the first mobile network to the second mobile network is a temporary change. I.e., the first mobile network is the default network used by the subscriber and only under certain circumstances the second mobile network is activated. To do so, after a change from the first mobile network to the second mobile network, the server triggers a change from the second mobile network back to the first mobile network. After the first subscription credentials are restored the subscriber may log on to the first mobile network again based on the restored credentials of the subscriber for the first mobile network. Although the restoring of the initial subscription could be performed in case that said one or more criteria out of the number of criteria are no longer fulfilled, preferably a second criteria is used. The second criteria can be chosen independently of the first criteria. Accordingly, e.g. a temporary network change of a second subscriber may be used, after the temporary network change of the fist subscriber has "expired", if the first criteria is still fulfilled.

In a particularly preferred embodiment of the invention, said one or more criteria out of the number of criteria refer to one or more features related to the data transmission within the first and/ or mobile network. Preferably, one criterion out of the number of criteria refers to the load of the first mobile network, i.e. the occupied resources in the first mobile network. In this case, the criterion is fulfilled in case that the load exceeds a predetermined threshold. In another variant of the invention, one criterion of the number of criteria refers to the data usage of the subscriber, where the criterion is fulfilled in case that the data usage falls under or exceeds a predefined threshold.

In another embodiment of the invention, the first mobile network provides more data usage rights and/ or services of a higher quality level than the second mobile network, particularly a higher data transmission rate. E.g., the first mobile network refers to a 4G network and the second mobile network to a 3G or 2G network. Analogously, the first mobile network may refer to a 3G network whereas the second mobile network refers to a 2G network. In this embodiment of the invention, a change from the first mobile network providing more rights and/ or higher quality services to the second mobile network is preferably initiated in case that the load of the first network exceeds a predetermined threshold and/ or the data usage of the subscriber falls under a predefined threshold. In the latter case, due to the low data usage, a mobile network having less rights and/ or a lower quality level of services shall be sufficient for data transmission.

In another embodiment of the invention, the change from the first mobile network to the second mobile network is triggered by the server by loading the number of subscription credentials of the subscriber for the second mobile network to the memory module. This embodiment is used in case that the memory module initially does not include subscription credentials for the second mobile network (standard situation).

In an improved variant, the numbers of subscription credentials of the subscriber for both the first and the second mobile network are prestored in the memory module.

In a particularly preferred embodiment, the server comprises a server register storing the subscriptions of the subscriber to different mobile networks. Each subscription in this register includes information needed for authenticating the subscriber for logon to the corresponding mobile network. I.e., each subscription in the register includes a secret, e.g. one or more keys, processed together with the subscription credentials provided by the memory module in order to perform the authentication. Preferably, each subscription of the subscriber in the register refers to the same subscriber identification number (MSISDN), i.e. the same phone number for addressing the subscriber. Hence, though different subscriptions are used, the identification number of the subscriber does not change. Consequently, each subscription credential comprises a module identifier (IMSI) and an associated key. Different subscription credentials comprise different module identifiers and different associated keys.

Each network comprises a network register, typically referred to as the home location register, which stores the subscription credentials for this network. In one variant of the above embodiment, the second subscription credentials are prestored in the network register of the second mobile network.

In one variant of the above embodiment, the subscriptions of the subscriber to the first and second mobile network are prestored in the server register. For enabling the (temporary) network change the server loads the second subscription credentials of the subscriber to the second mobile network.

In another variant of the invention, different authentication algorithms for authenticating the subscriber for logon to different mobile networks are used. I.e., not only the subscription credentials for different mobile networks but also the authentication algorithms differ.

Besides the above described method, the invention also refers to a mobile telecommunication system comprising mobile networks usable by subscriber via a mobile equipment, where the subscriber is represented by a module storing the subscriber identity. The system comprises a server managing the subscriptions of the subscriber to different mobile networks. The subscriber is authenticated for logon to the mobile network based on subscription credentials of the subscriber stored in the memory module for the mobile network.

The server and the subscriber identity module can be adapted to perform the above described method(s). I.e., the server triggers the change from a first mobile network currently used by the subscriber to another second mobile network in case that one or more criteria out of a number of criteria are fulfilled. Upon triggering the network change by the server, the subscriber logs on to the second mobile network based on the number of subscription credentials of the subscriber for the second mobile network.

The subscription credentials of a subscriber are stored in a subscription module. The subscription module may be a hardware module or a software module (virtual module/virtual SIM). The software module preferably would be implemented in a Trusted Execution Environment of the equipment, e.g. as specified in the corresponding Global Platform specifications. The hardware subscription module may be reversibly arranged in the equipment, e.g. as a SIM card, a secure multimedia card or a secure USB token, or fixedly arranged in the equipment, e.g. as a TPM module, embedded SIM module or M2M module.

The equipment preferably is a mobile equipment, such as a mobile phone. However the equipment could also be a fixed device, such as a smart meter or M2M device, including a subscription module for the mobile communication system.

An embodiment of the invention will now be described in detail with respect to the accompanying Figures.
Fig.1 illustrates a mobile communications system with multiple networks, a server and the subscriber's terminal and SIM card; and
Fig.2 illustrates the process steps performed in the server.

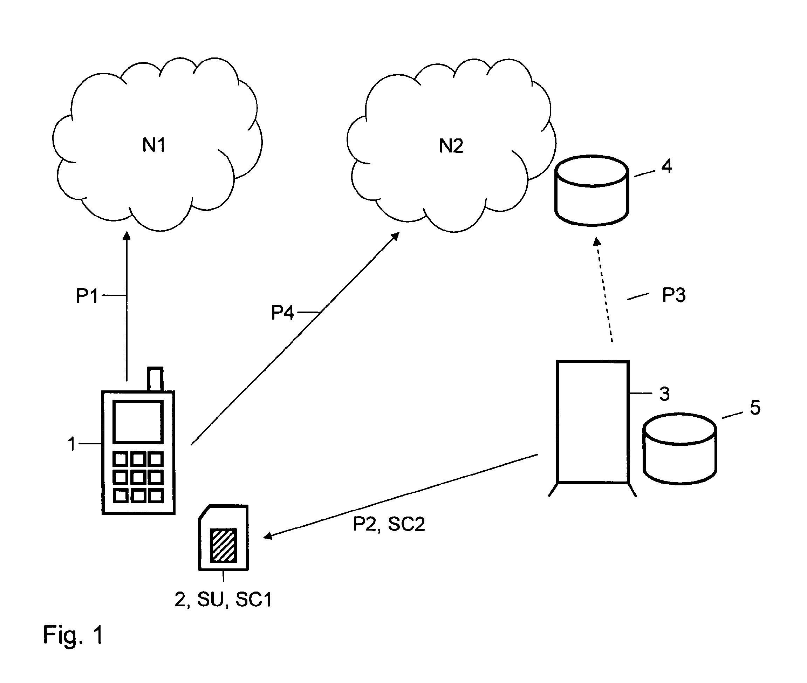

Figure 1 shows a mobile telecommunication system in which a variant of the method according to the invention is performed.

The mobile telecommunication system shown in Fig. 1 comprises a first network N1 in the form of a 3G network and a second network N2 in the form of a 2G network. A subscriber SU assigned to a USIM card 2 (USIM = Universal Subscriber Identity Module) can communicate with other subscribers or servers via the 3G network N1 by the use of the mobile equipment 1. To enable this communication, the USIM card 2 is inserted into the mobile equipment 1 and the subscriber SU logs on to the network N1 by the use of subscription credentials SC1 stored on the card 2. This logon is indicated by arrow P1 in Fig.1. The subscription credentials SC1 refer to the unique subscriber module identity IMSI (IMSI = International Mobile Subscriber Identity) and an authentication key valid for the first network N1. A calling identifier MSISDN of the subscriber will remain unchanged in the following process.

In the logon procedure, the subscriber SU in the network N1 is authenticated based on the subscription credentials SC1 which are also stored in the home location register (HLR) 4. The HLR 4 of a network stores the subscriptions of a plurality of subscribers. The authentication is based on a predefined algorithm specific for the 3G network N1. In case of a successful logon, the subscriber can transmit and receive data via the network N1, e.g. data associated with the voice call or other data like emails and so on.

The server 3 comprises a server register 5 storing subscription credentials SC1, SC2 for a plurality of networks and subscribers. The subscription credentials SC1 and SC2 differ in the included module identifier and the authentication key.

In the embodiment described herein, the subscriber SU is forced to use the 2G network N2 under certain circumstances. In comparison to the 3G network N1, the 2G network N2 has lower data transmission rates. The change to the 2G network N2 is triggered by the server 3. For example, the server 3 monitors the activity of the subscribers in the network N1. In the scenario of Fig.1, the server 3 initiates a change from the network N1 to the network N2 in case that the load of the network N1 exceeds a certain threshold and/ or in case that the data usage of the subscriber SU is low, i.e. only a small amount of data is transferred by the subscriber in a past time interval. In the first case, a network overload reducing the overall performance of the 3G network is avoided. In the latter case, the transmission capabilities of the 2G network N2 shall be sufficient for communication with the advantage of a lower battery consumption of the mobile equipment 1.

In case that a high network load and/or a low data usage is determined by server 3, the server triggers the change of the network by loading subscription credentials SC2 referring to the 2G network N2 on the USIM card 2. In an alternative embodiment, those subscription credentials are prestored in the USIM card 2 so that only a command for changing the subscription has to be transmitted from the server 3 to the card 2. The loading of the subscription credentials SC2 on the card 2 is preferably performed over-the-air and particularly via the first network N1. The download of the subscription credentials to the card 2 is indicated by dashed arrow P2 in Fig.1.

In parallel to the download of the subscription credentials to the card 2, a corresponding subscription of the subscriber 2 to the second network N2 is loaded by server 3 into the home location register 4 as indicated by dashed arrow P3. In the embodiment described herein, this subscription did not exist beforehand in the register 4. However, it may also be possible that the subscription to the second network N2 is already stored in the home location register 4. The subscription to the network N2 refers to the same mobile subscriber ISDN number MSISDN (i.e. the phone number or calling identifier associated with the subscriber) as for the first network N1 so that the subscriber can be reached by the same phone number, regardless whether the subscriber is logged on to network N1 or N2.

Upon receipt of the subscription credentials SC2 in the USIM card 2, this subscription is made active. To do so, the USIM card restarts the mobile equipment 1, e.g. using SIM toolkit refreshment command. Thereafter, the mobile equipment 1 restarts and logs on to the network N2 using the 2G subscription credentials SC2 and the subscription stored in the register 4. This is indicated by dashed arrow P4 in Fig.1. The algorithm used for this authentication differs from the algorithm used for logon to network N1.

In the embodiments described herein, the use of the second network N2 is only temporary as long as the network load in the network N1 is high and/ or the data usage of the subscriber SU is low. In case that those criteria no longer apply, the subscriber is switched back to the 3G network N1. This is performed analogously to the above described network change from network N1 to N2. I.e., a corresponding command is transmitted from the server 3 to the USIM card 2 initiating a logon of the subscriber SU to the network N1 via the subscription credentials SC1. As the subscription credentials SC1 are already stored in the USIM card 2, no download has to be initiated. Analogously, the subscription to the network N1 is already stored in the home location register 4 so that no new subscription has to be registered in the register 4.

In the foregoing, an embodiment for a temporary change from a 3G to a 2G network has been described. However, in another variant of the invention, a temporary switching from the 2G network N2 to the 3G network N1 may also be initiated by the server 3 based on corresponding criteria, e.g. based on an increased data usage.

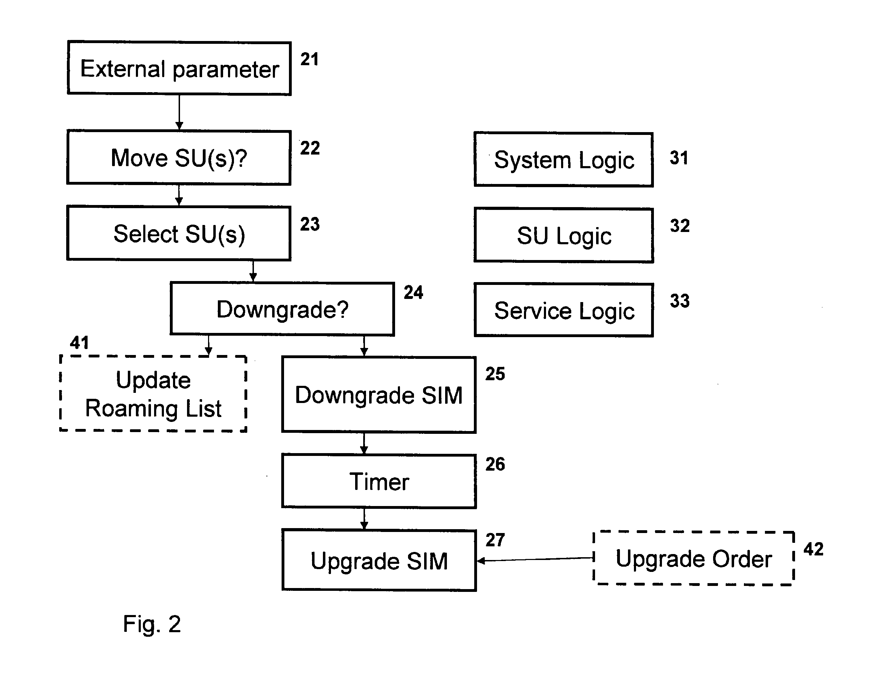

The process steps performed in the server 3 will be explained in more detail with reference to Fig. 2.

First, those steps being similar to known from prior art solutions will be described. In step 21 the server receives some kind of external parameter. The server may now determine 22 whether it is appropriate to move a subscriber unit from a first to a second network or not. For indirectly moving a subscriber to the second network the server optionally could update 41 at least one roaming list (e.g. PLMN list and/or FPLMN list) of the subscriber.

Further optionally the server may be adapted to upgrade an existing subscriber from a 2G network to a 3G network on, in particular on request of the subscriber's network provider. The server may receive 42 an upgrade order and change the subscriber's subscription as requested in the order, e.g. by updating 27 the subscriber's SIM card. The received order already identifies the subscriber to be upgraded and the action to be performed (upgrade). In particular steps 41 and 42 are optional for the present solution and possibly helpful for explaining differences between prior art solutions and the present solution.

However, according to the present approach, the server 3 - in response to receipt 21 of the external parameter - determines 22 whether to move at least one subscriber from one network to another. For this step of determining 22 the server uses the stored system logic 31, holding conditions and/ or rules when subscribers should be moved. Furthermore, if at least one subscriber should be moved, the server selects 23 the at least one subscriber out of the plurality of known subscribers. For the selection step the stored subscriber logic 32 is used, which may comprise general selection rules (e.g.: "select by usage") and/or subscriber specific selection rules (e.g.: "non-selectable subscriber" or "maximum downgrade time"). Finally, in step 24 a decision is made whether selected subscriber(s) shall be moved by updating 41 and/or downgrading 25. The step 25 of downgrading a subscriber comprises updating the subscription, i.e. particularly the subscription credentials, on the SIM card and possibly comprises updating the network (user subscription in HLR).

The subscriber however pays for and has selected a specific subscription. Hence, the server starts 26 a timer and monitors its expiry. When a predetermined criteria is met, e.g. the timer has expired, the server upgrades 27 the downgraded subscriber back to its original subscription. Accordingly, in step 27 the original subscription on the SIM card is restored and the network register HLR 4 will be updated if required. The server updates (amends) the subscription credentials of the SIM card, in steps 25 or 27, by sending corresponding instructions to the SIM card, e.g. via SMS.

The invention as described in the foregoing has several advantages. Particularly, the server in the mobile telecommunication system being responsible for authenticating to different mobile networks monitors criteria for a network change and initiates this change in case that the criteria are fulfilled. Furthermore, the network change is only temporary, i.e. the subscriber is switched back to the original network in case that the criteria no longer apply. When changing to another network, the phone number of the subscriber is not changed ensuring that the subscriber can be reached with the same phone number at all time.

## Claims

1. A method in a mobile communication system, the system comprising a plurality of equipments (1) each including a subscription module (2), mobile networks (N1, N2) and a server (3), wherein a subscription module (2) stores subscription credentials (SC1) allowing an equipment (1) to logon to a first mobile network (N1) of the mobile networks (N1,N2), wherein:
a) the server (3) decides (22) whether to move at least one subscriber from the first mobile network (N1) to a second mobile network (N2) in case that a first criteria is fulfilled;
b) after the step of deciding (22), the server (3) amends (25) the subscription credentials (SC2) stored in the subscription module (2), the amended subscription credentials (SC2) allowing the equipment (1) to logon to the second mobile network (N2) of the mobile networks (N1,N2) but not to the first mobile network (N1).

2. The method according to claim 1, **characterized in that** the first and second subscription credentials (SC1, SC2) comprise different keys and/ or different subscriber module identifiers.

3. The method according to claim 1 or 2, **characterized in that** the server (3) monitors (26) a second criteria and restores (27) the first subscription credentials (SC1) in the subscription module (2) when the second criteria is fulfilled.

4. The method according to one of claims 1 to 3, **characterized in that** said first criteria out of a number of criteria refer to one or more features related to the data transmission within the first and/or second mobile network (N1, N2).

5. The method according to one of the preceding claims, **characterized in that** one criterion out of the number of criteria refers to the load of the first mobile network (N1) where the criterion is fulfilled in case that the load exceeds a predetermined threshold.

6. The method according to one of the preceding claims, **characterized in that** the server (3) after the step of deciding (22) selects (23) the subscriber as one out of a number of selectable subscribers.

7. The method according to one of the preceding claims, **characterized in that** one criterion of the number of criteria refers to the data usage of the subscriber (SU), where the criterion is fulfilled in case the data usage falls under or exceeds a predefined threshold.

8. The method according to one of the preceding claims, **characterized in that** the first mobile network (N1) provides more data usage rights and/ or services of a higher quality level than the second mobile network (N2), particularly a higher data transmission rate.

9. The method according to one of the preceding claims, **characterized in that** in the step of amending (25) the server (3) transmits the subscription credentials (SC2) for the second mobile network (N2) to the subscription module (2).

10. The method according to one of claims 1 to 8, **characterized in that** the subscription credentials (SC1, SC2) of the subscriber (SU) for both the first and the second mobile network (N1, N2) are pre-stored in the subscription module (2), wherein the server (3) amends the state of the pre-stored subscription credentials (SC1, SC2).

11. The method according to one of the preceding claims, **characterized in that** the server (3) is associated with a server register (5) storing the subscription credentials (SC1, SC2) to the different mobile networks, the first and second subscription credentials preferably referring to the same calling identification number.

12. The method according to claim 11, **characterized in that** the subscriptions of the subscriber (SU) to the first and second mobile network are pre-stored in the server register (4).

13. The method according to claim 11 or 12, **characterized in that** the server (3) loads the subscription of the subscriber (SU) to a network register (4) of the second mobile network (N2).

14. The method according to claim 11 or 12, **characterized in that** the server (3) uses subscription credentials pre-stored on a network register (4) of the second mobile network (N2) as the second subscription credentials (SC2).

15. The method according to one of the preceding claims, **characterized in that** different authentication algorithms for authenticating the subscriber (SU) for logon to different mobile networks are used.

16. The method according to one of the preceding claims, **characterized in that** the server (3) further decides (24) whether to move the subscriber by updating (41) the subscriber's network selection list or by said step of amending (25) the subscription credentials (SC1).

17. A server (3) for managing subscriptions to mobile networks (N1, N2) in a mobile telecommunication system, in which equipments (1) use subscription credentials (SC1, SC2) for logon to mobile networks (N1, N2), and
the server (3) stores first decision criteria and is adapted to decide to move at least one subscriber from the first mobile network (N1) to a second mobile network (N2) in case that the decision criteria is fulfilled; the server (3) further is adapted to amend (25) the subscription credentials (SC2) of the subscriber, the amended subscription credentials (SC2) allowing the mobile equipment (1, 2) to logon to the second mobile network (N2) of the mobile networks (N1,N2) but not to the first mobile network (N1).

18. A mobile telecommunication system comprising:
- an equipment (1, 2) of a subscriber (SU),
- mobile networks (N1, N2) usable by the subscriber (SU) via the mobile equipment (1), wherein the mobile equipment (1, 2) uses first subscription credentials (SC1) for logon to a first mobile network (N1), and
- the server (3) of claim 17.

19. The system according to claim 18, **characterized in that** the system is arranged to perform a method according to one of claims 2 to 16.
